# EUROPEAN PATENT APPLICATION

(11) **EP 4 427 643 A1**
(43) Date of publication of application: **11.09.2024**
(21) Application number: 22893013.7
(22) Date of filing: 22.09.2022
(51) Int. Cl.: A47J 31/16, A47J 31/057, A47J 31/44

(54) **COFFEE EXTRACTION APPARATUS**

(30) Priority: 11.11.2021 KR 20210154998
(71) Applicant: Jung, Sangjun, Daejeon 34308 (KR)
(72) Inventor: Jung, Sangjun, Daejeon 34308 (KR)
(74) Representative: Studio Torta S.p.A.
(86) International application number: PCT/KR2022/014141
(87) International publication number: WO 2023/085590

(57) **Abstract**

According to an embodiment of the present disclosure, provided is a coffee extraction apparatus including a boil chamber portion having a hollow inside and one side that is open, a bottom plate portion arranged inside the boil chamber portion and partitioning the boil chamber portion into a plurality of regions, an accommodation chamber portion coupled to the bottom plate portion, and having a hollow inside and an opening formed in one side thereof so as to accommodate a first fluid, a basket portion that is in communication with the accommodation chamber portion and arranged in the accommodation chamber portion, and capable of accommodating coffee bean powder, and a container portion that is connected to the boil chamber portion, and receives a content that is generated when the first fluid supplied from the accommodation chamber portion passes through the basket portion, wherein an accommodation space capable of accommodating a second fluid is formed between an inner circumference of the boil chamber portion and an outer circumference of the accommodation chamber portion.

## Description

### Technical field

One or more embodiments of the present disclosure relate to a coffee extraction apparatus.

### Background

In general, coffee is a favorite beverage that is drinkable by extracting ingredients from roasted beans using water, wherein the roasted beans are obtained by roasting green beans from fruits harvested from coffee trees. Coffee extraction methods may include individual extraction mechanism including Turkish coffee obtained through a Turkish infusion method, a hand drip method which slowly extracts coffee through a filter-type extraction after pouring hot water, an automatic drip method in which coffee is extracted by evenly pouring hot water automatically through an electronic control, a vacuum pot that is a vacuum type extraction method in which extraction is made by using steam pressure and osmotic pressure of water, a mocha pot extracting coffee by using steam pressure, etc., and recently, modern espresso machines or full-automatic coffee machines combined with digital technology have been developed to achieve convenience.

From among those, the mocha pot is described in detail as follows. The mocha pot is a device allowing espresso coffee to be extracted by passing hot water through fine-ground coffee beans with high pressure, and includes a boiler accommodating water heated by the heat from a heat source, a filter basket of a funnel shape accommodating coffee bean powder, and a container accommodating extracted espresso and a handle, arranged sequentially from the lower portion thereof.

In general, it is known that espresso is extracted within 20 to 30 seconds with water at a pressure of 9 atmospheric pressure and a temperature of around 90 °C to 95 °C in terms of good taste and aroma. However, an internal pressure of a mocha pot according to the related art is around 1 atmospheric pressure, and a boiling temperature of water is relatively high because the boiling temperature rises according to the given atmospheric pressure, and the extraction time is increased. Thus, there is a difference in the quality of extracted espresso as compared with a commercial espresso machine that extracts the espresso under optimal conditions.

The background art of the disclosure is disclosed in Korean Laid-open Patent No. 10-2021-0019946 (published on February 23, 2021, title of invention: espresso extraction apparatus).

### Detailed Description of the Disclosure

### Technical Problem

To address the above issues, the present disclosure provides a coffee extraction apparatus capable of improving quality of coffee by double boiling water for extracting coffee so as to extract the coffee at an appropriate temperature.

However, the above technical features are just examples, and the scope of the disclosure is not limited thereto.

### Technical Solution

According to an embodiment of the present disclosure, provided is a coffee extraction apparatus including a boil chamber portion having a hollow inside and one side that is open, a bottom plate portion arranged inside the boil chamber portion and partitioning the boil chamber portion into a plurality of regions, an accommodation chamber portion coupled to the bottom plate portion, and having a hollow inside and an opening formed in one side thereof so as to accommodate a first fluid, a basket portion that is in communication with the accommodation chamber portion and arranged in the accommodation chamber portion, and capable of accommodating coffee bean powder, and a container portion that is connected to the boil chamber portion, and receives a content that is generated when the first fluid supplied from the accommodation chamber portion passes through the basket portion, wherein an accommodation space capable of accommodating a second fluid is formed between an inner circumference of the boil chamber portion and an outer circumference of the accommodation chamber portion.

According to the present disclosure, the bottom plate portion may include a gas supply tube portion that allows the boil chamber portion and the accommodation chamber portion to be in communication with each other and extends to a preset length.

The present disclosure may further include a packing portion disposed between the basket portion and the container portion.

The present disclosure may further include a container cover covering the container portion.

According to the present disclosure, the container portion may include: a container body that is connected to the boil chamber portion; and an extraction tube portion connected to the container body and flowing the content supplied from the accommodation chamber portion to be discharged to outside.

According to the present disclosure, the container portion may further include a pressure measurement portion installed on the extraction tube portion and measuring an internal pressure of the extraction tube portion.

According to the present disclosure, the container portion may further include an opening/closing valve installed on the extraction tube portion and opening/closing the extraction tube portion.

According to the present disclosure, at least one discharge hole portion may be provided in the outer circumference of the container portion to be in communication with the accommodation space.

According to another embodiment of the present disclosure, provided is a coffee extraction apparatus including: a boil chamber portion having a hollow inside and one side that is open; a bottom plate portion arranged inside the boil chamber portion and partitioning the boil chamber portion into a plurality of regions; an accommodation chamber portion coupled to the bottom plate portion, and having a hollow inside and an opening formed in one side thereof so as to accommodate a first fluid; a flow path portion that is in communication with the accommodation chamber portion and provides a flow path of the first fluid accommodated in the accommodation chamber portion to outside; a cover portion that is connectable to the boil chamber portion while covering the boil chamber portion and discharges the first fluid supplied from the flow path portion to the outside; and an extraction portion that is connectable to the cover portion and accommodates coffee bean powder, and receives the first fluid from the cover portion to pass the first fluid through the coffee bean powder, wherein an accommodation space capable of accommodating a second fluid is formed between an inner circumference of the boil chamber portion and an outer circumference of the accommodation chamber portion.

According to the present disclosure, the cover portion may include: a cover body that may be connected to the boil chamber portion; and a supply flow path portion connected to the cover body and flowing the first fluid supplied from the accommodation chamber portion to be supplied to the extraction portion.

Other aspects, features and advantages other than those described above will become apparent from the following detailed description of the drawings, claims and disclosure.

### [Advantageous Effects of Disclosure]

A coffee extraction apparatus according to the present disclosure has an effect of providing a temperature suitable for coffee extraction by double-boiling a first fluid accommodated in an accommodation chamber portion that is arranged inside to be spaced apart from a boil chamber portion, in a second fluid which receives heat directly from a heat source, so that a temperature of the first fluid does not exceed 100°C.

In addition, because a bottom plate portion is arranged inside the boil chamber portion and partitions the boil chamber portion into a plurality of regions so as to form an accommodation space capable of accommodating a second fluid between an outer circumference of the accommodation chamber portion and an inner circumference of the boil chamber portion, there is an effect of double-boiling the first fluid accommodated in the accommodation chamber portion to the temperature suitable for the coffee extraction.

In addition, a steam pressure of the second fluid heated directly by the heat transferred from the heat source may be supplied into the accommodation chamber portion due to a gas supply tube portion formed in the bottom plate portion, and the coffee may be extracted at a pressure optimized for the coffee extraction.

However, the scope of one or more embodiments is not limited to the above effects.

### Brief Description of Drawings

FIG. 1 is a perspective view of a coffee extraction apparatus according to an embodiment of the present disclosure.
FIG. 2A is a cross-sectional view taken along line I-I of FIG. 1.
FIG. 2B is an enlarged view of part A in FIG. 2A according to another embodiment.
FIG. 3 is an exploded perspective view of a coffee extraction apparatus according to an embodiment of the present disclosure.
FIG. 4 is a diagram showing a state of using a coffee extraction apparatus according to an embodiment of the present disclosure.
FIG. 5 is a perspective view of a coffee extraction apparatus according to another embodiment of the present disclosure.
FIG. 6 is a cross-sectional view taken along line II-II of FIG. 5.
FIG. 7 is an exploded perspective view of a coffee extraction apparatus according to another embodiment of the present disclosure.
FIG. 8 is a diagram showing a state of using a coffee extraction apparatus according to another embodiment of the present disclosure.
FIG. 9 is a perspective view of a coffee extraction apparatus according to another embodiment of the present disclosure.
FIG. 10 is a cross-sectional view taken along line III-III of FIG. 9.
FIG. 11 is an exploded perspective view of a coffee extraction apparatus according to another embodiment of the present disclosure.
FIG. 12 is a diagram showing a state of using a coffee extraction apparatus according to another embodiment of the present disclosure.
FIG. 13 is a diagram showing a state of using a coffee extraction apparatus according to another embodiment of the present disclosure.

### Best Mode

As the present disclosure allows for various changes and numerous embodiments, particular embodiments will be illustrated in the drawings and described in detail in the written description. The attached drawings for illustrating one or more embodiments are referred to in order to gain a sufficient understanding, the merits thereof, and the objectives accomplished by the implementation. However, the embodiments may have different forms and should not be construed as being limited to the descriptions set forth herein.

The embodiments will be described below in more detail with reference to the accompanying drawings. Those components that are the same or are in correspondence are rendered the same reference numeral regardless of the figure number, and redundant explanations are omitted.

While such terms as "first," "second," etc., may be used to describe various components, such components are not be limited to the above terms. The above terms are used only to distinguish one component from another.

An expression used in the singular encompasses the expression of the plural, unless it has a clearly different meaning in the context.

In the present specification, it is to be understood that the terms "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

It will be understood that when a layer, region, or component is referred to as being "formed on" another layer, region, or component, it may be directly or indirectly formed on the other layer, region, or component. That is, for example, intervening layers, regions, or components may be present.

Sizes of components in the drawings may be exaggerated for convenience of explanation. In other words, since sizes and thicknesses of components in the drawings are arbitrarily illustrated for convenience of explanation, the following embodiments are not limited thereto.

When a certain embodiment is implemented differently, a specific process order may be performed differently from the described order. For example, two consecutively described processes may be performed substantially at the same time or performed in an order opposite to the described order.

In the embodiments below, when layers, areas, or elements or the like are referred to as being "connected," it will be understood that they may be directly connected or an intervening portion may be present between layers, areas or elements. For example, when layers, areas, or elements or the like are referred to as being "electrically connected," they may be directly electrically connected, or layers, areas or elements may be indirectly electrically connected and an intervening portion may be present.

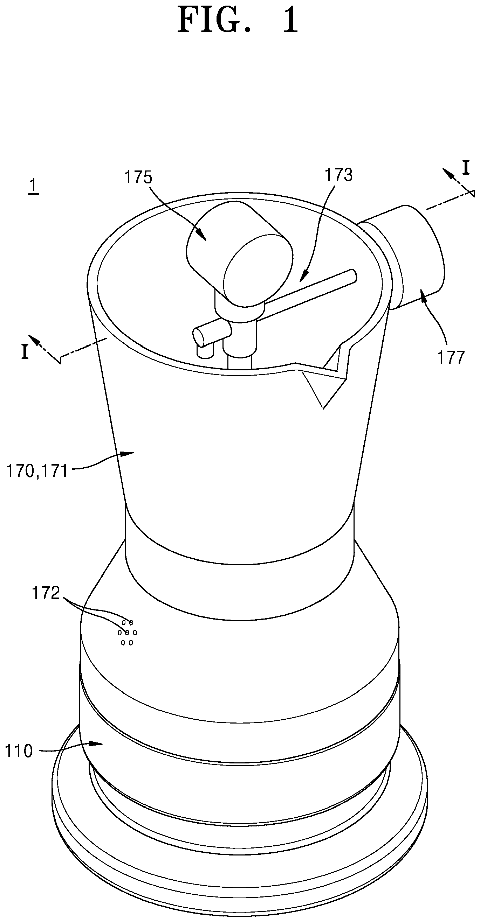

FIG. 1 is a perspective view of a coffee extraction apparatus according to an embodiment of the present disclosure.

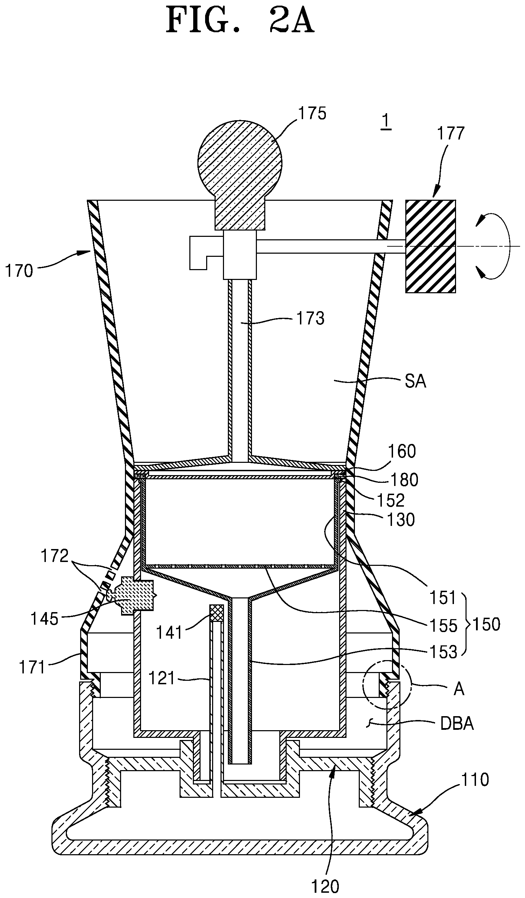

FIG. 2A is a cross-sectional view taken along line I-I of FIG. 1.

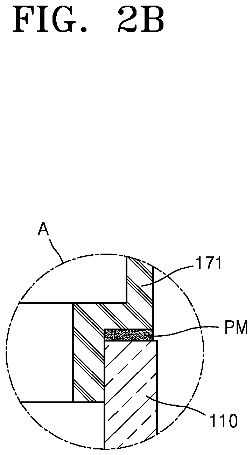

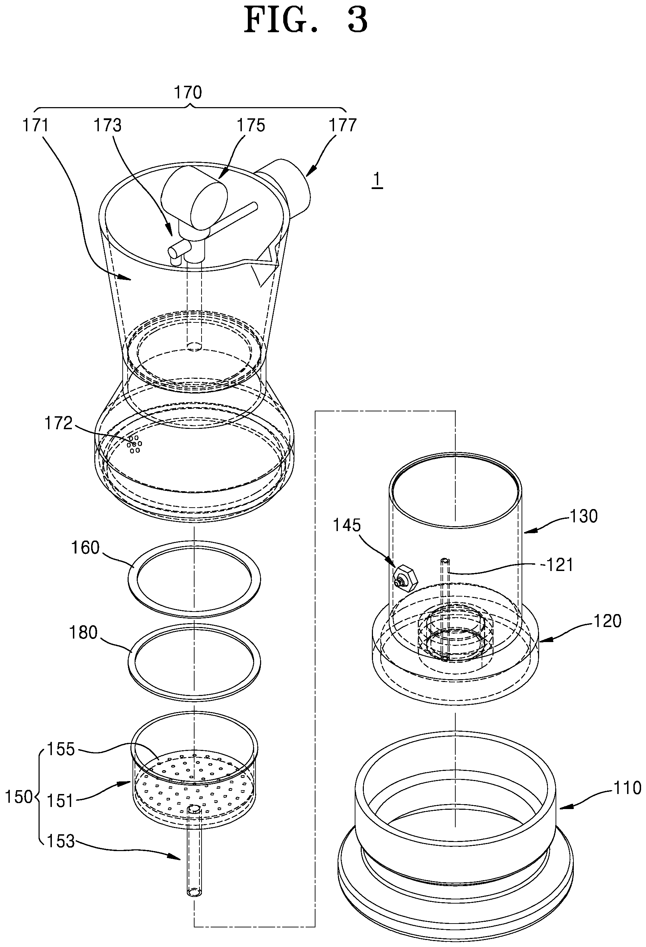

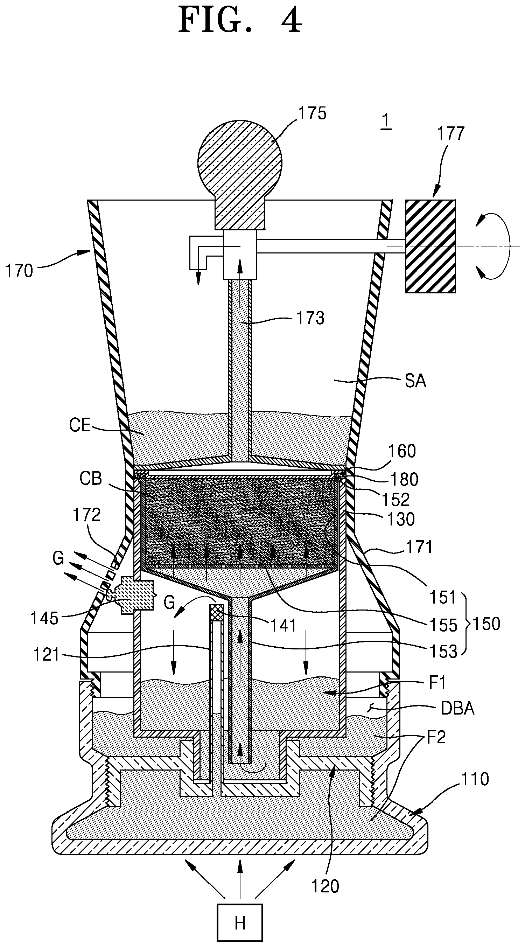

FIG. 2B is an enlarged view of part A in FIG. 2A according to another embodiment. FIG. 3 is an exploded perspective view of a coffee extraction apparatus according to an embodiment of the present disclosure. FIG. 4 is a diagram showing a state of using a coffee extraction apparatus according to an embodiment of the present disclosure.

Referring to FIGS. 1 to 4, a coffee extraction apparatus 1 according to an embodiment of the present disclosure may include a boil chamber portion 110, a bottom plate portion 120, an accommodation chamber portion 130, a basket portion 150, a filter portion 160, a container portion 170, and a packing portion 180.

Referring to FIGS. 1 to 4, the boil chamber portion 110 according to an embodiment of the present disclosure has a hollow inside, and may have one side (upper side based on FIG. 2A) that is open. The boil chamber portion 110 may come into contact with a heat source H such as an electric heating apparatus for providing heat, and fluids F1 and F2 accommodated therein may be directly and indirectly heated by the heat transferred from the heat source H.

Referring to FIGS. 1 to 4, the boil chamber portion 110 according to an embodiment of the present disclosure may be connected to the bottom plate portion 120 and the container portion 170 that will be described later. The boil chamber portion 110 may be screw-coupled respectively to the bottom plate portion 120 and the container portion 170.

In detail, the bottom plate portion 120 may be arranged in the boil chamber portion 110 and may be connected while coming into contact with an inner circumference of the boil chamber portion 110. The container portion 170 may be connected to an upper end portion of the boil chamber portion 110 and may cover an opening region formed in one side (upper side based on FIG. 3) of the boil chamber portion 110.

Referring to FIG. 2A, the boil chamber portion 110 according to an embodiment of the present disclosure may be screw-coupled to the bottom plate portion 120 and the container portion 170.

A screw groove portion may be formed in each of the surfaces of the boil chamber portion 110, which face the bottom plate portion 120 and the container portion 170, and a screw thread may be formed on each surface of the bottom plate portion 120 and the container portion 170 so as to be screw-coupled to the screw groove portion.

In the present disclosure, the boil chamber portion 110 is coupled to the bottom plate portion 120 and the container portion 170 in a screw-coupling manner, but the disclosure is not limited thereto, and various modifications are possible within the technical scope in which the boil chamber portion 110 and the bottom plate portion 120 and the boil chamber portion 110 and the container portion 170 may be fastened with each other.

In an alternative embodiment, various modifications are possible, e.g., the outer circumference of the accommodation chamber portion 130 and the inner circumference of the container portion 170 facing each other may be fastened, and for example, the outer circumference of the accommodation chamber portion 130 and the inner circumference of the container portion 170 may be fastened with each other in the screw-coupling manner.

The boil chamber portion 110 according to an embodiment of the present disclosure may be formed of a material that easily transfers heat, in order to transfer the heat supplied from the heat source H to the fluid accommodated therein, in particular, the second fluid F2.

Referring to FIG. 4, the second fluid F2 may be accommodated inside the boil chamber portion 110 according to an embodiment of the present disclosure. In this specification, the second fluid F2 may be water and may be heated by the heat source H so as to double-boil the first fluid F1 that is accommodated in the accommodation chamber portion 130 that is to be described later.

Referring to FIG. 2A, an internal space of the boil chamber portion 110 according to an embodiment of the present disclosure may be partitioned into a plurality of regions by the bottom plate portion 120. In detail, based on the bottom plate portion 120, a plurality of regions capable of accommodating the second fluid F2 may be formed on upper and lower sides.

Referring to FIGS. 2A and 4, on the upper side (based on FIG. 4) of the bottom plate portion 120, an accommodation space DBA capable of accommodating the second fluid F2 may be formed between the inner circumference of the boil chamber portion 110 and the outer circumference of the accommodation chamber portion 130 coupled to the bottom plate portion 120.

In the specification, the accommodation space DBA is a region accommodating the second fluid F2 and a space for double-boiling the first fluid F1 accommodated in the accommodation chamber portion 130 that is described later, by the heat transferred from the heat source H.

Referring to FIG. 4, the second fluid F2 accommodated in the accommodation space DBA receives the supply of heat from the heat source H located outside, for double-boiling the first fluid F1 accommodated in the accommodation chamber portion 130, and thus, the first fluid F1 may pass through coffee bean powder CB accommodated in the basket portion 150 that is described later at a temperature of 90 °C to 95 °C without exceeding 100 °C. Thus, coffee CE, in particular, espresso coffee may be extracted and the quality of the coffee CE may be improved.

Referring to FIGS. 2A and 4, in the internal area of the boil chamber portion 110, a region located under the bottom plate portion 120 receives the heat supplied from the heat source H and heats the second fluid F2, and steam and gas G generated from the above region may flow into the accommodation chamber portion 130 via a gas supply tube portion 121 formed in the bottom plate portion 120, that is described later, and may increase the internal pressure of the accommodation chamber portion 130.

As the internal pressure of the accommodation chamber portion 130 rises, the first fluid F1 accommodated in the accommodation chamber portion 130 flows to the basket portion 150, and the first fluid F1 passes through the coffee bean powder CB accommodated in the basket portion 150 and generates the coffee CE extracted into the container portion 170.

Referring to FIGS. 2A to 4, the bottom plate portion 120 according to an embodiment of the present disclosure is arranged in the boil chamber portion 110, and may partition the boil chamber portion 110 into a plurality of regions.

The bottom plate portion 120 may be coupled to the boil chamber portion 110 in a screw-coupling manner. In particular, the outer circumference of the bottom plate portion 120 and the inner circumference of the boil chamber portion 110 may be coupled to each other in the screw-coupling manner.

However, the present disclosure is not limited thereto, and various modifications are possible within the technical scope in which the bottom plate portion 120 partitions the internal space of the boil chamber portion 110 into a plurality of regions and is connected to the boil chamber portion 110.

Referring to FIGS. 2A to 4, the bottom plate portion 120 according to an embodiment of the present disclosure may be coupled to the accommodation chamber portion 130 that is described later.

Referring to FIG. 2A, the bottom plate portion 120 and the accommodation chamber portion 130 according to an embodiment of the present disclosure may be fastened with each other while sharing a center axis in the lengthwise direction (vertical direction based on FIG. 2A).

Because the accommodation chamber portion 130 is coupled to the bottom plate portion 120, the first fluid F1 accommodated in the accommodation chamber portion 130 is not directly supplied with the heat from the heat source H, but is double-boiled by the second fluid F2 that directly receives the heat from the heat source H and is heated in the accommodation space DBA. Thus, the first fluid F1 may be heated to a temperature less than 100 °C, in detail, a temperature of 90 °C to 95 °C.

A central region of the bottom plate portion 120 may have a fastening groove portion (not indicated by reference numeral) having a certain depth so that one end portion (lower end portion based on FIG. 2A) of the accommodation chamber portion 130 is inserted and fastened therein. The gas supply tube portion 121 may be formed in the bottom plate portion 120 to extend in the lengthwise direction (vertical direction based on FIG. 2A).

The gas supply tube portion 121 extends so that the upper and lower regions of the bottom plate portion 120 are in communication with each other, and may be formed on the coupling groove portion so that one end portion (upper end portion based on FIG. 2A) is located in the accommodation chamber portion 130.

Through the gas supply tube portion 121, the second fluid F2 accommodated in the region corresponding to the lower side of the bottom plate portion 120, in the internal space of the boil chamber portion 110, is heated due to the heat transferred from the heat source H and generates steam, that is, the gas G. The gas G flows into the accommodation chamber portion 130 to increase the pressure, and the first fluid F1 accommodated in the accommodation chamber portion 130 may flow to the basket portion 150.

Referring to FIGS. 2A and 4, a first valve portion 141 may be installed at one end portion of the gas supply tube portion 121 according to an embodiment of the present disclosure, in particular, the upper end portion located in the accommodation chamber portion 130 (based on FIG. 2A).

The steam pressure of the second fluid F2 flowing into the accommodation chamber portion 130 from the gas supply tube portion 121 may be adjusted due to the first valve portion 141. However, the present disclosure is not limited thereto, and various modifications are possible, e.g., a gigleur may be installed at the upper end portion (based on FIG. 2A) of the gas supply tube portion 121, instead of the first valve portion 141.

Referring to FIGS. 2A to 4, the accommodation chamber portion 130 according to an embodiment of the present disclosure is coupled to the bottom plate portion 120, and has a hollow inside and an opening (not indicated by reference numeral) in one side thereof so as to accommodate the first fluid F1.

Referring to FIG. 2A, one end portion (lower end portion based on FIG. 2A) of the accommodation chamber portion 130 may be inserted and coupled into the bottom plate portion 120, and may have an opening (not indicated by reference numeral) formed in one end portion so that the bottom plate portion 120, in particular, the gas supply tube portion 121, may pass therethrough.

The outer circumference of the opening may be fastened with the inner circumference of the bottom plate portion 120, and in the present disclosure, the opening formed in the accommodation chamber portion 130 and one surface of the bottom plate portion 120 facing the opening, are fastened with each other in the screw-coupling manner. However, the present disclosure is not limited thereto, and various modifications are possible within the technical scope in which the bottom plate portion 120 is fastened with the accommodation chamber portion 130 and the position thereof may be fixed.

Referring to FIGS. 2A to 4, the accommodation chamber portion 130 according to an embodiment of the present disclosure may have an opening in the other side (upper side based on FIG. 2A) that is opposite to one side (lower side based on FIG. 2A) of the accommodation chamber portion 130, in which the opening is formed, so that the basket portion 150 may be inserted in the opening.

Referring to FIG. 4, the first fluid F1 accommodated in the accommodation chamber portion 130 according to an embodiment of the present disclosure may be double-boiled by the heat indirectly transferred from the first fluid F1 that is directly heated by the heat transferred from the heat source H.

As such, the first fluid F1 accommodated in the accommodation chamber portion 130 is not heated to the temperature of 100 °C or greater, and may be double-boiled to the temperature less than 100 °C, for example, the temperature of 90 °C to 95 °C.

Referring to FIGS. 2A and 4, the upper end (based on FIG. 2A) of the accommodation chamber portion 130 according to an embodiment of the present disclosure is arranged facing the container portion 170, in particular, the inner circumference of a container body 171, and the internal space of the accommodation chamber portion 130 may be sealed due to the packing portion 180 disposed between the inner circumference of the container body 171 and the upper end portion of the accommodation chamber portion 130.

Referring to FIGS. 2A to 4, a second valve portion 145 may be installed in the accommodation chamber portion 130 according to an embodiment of the present disclosure. Because the second valve portion 145 is installed in the accommodation chamber portion 130, when the internal pressure of the accommodation chamber portion 130 exceeds a pressure set in advance, the internal pressure of the accommodation chamber portion 130 may be adjusted by opening the second valve portion 145.

Moreover, because the second valve portion 145 is installed in the accommodation chamber portion 130, the internal pressure of the accommodation chamber portion 130 may be prevented from excessively increasing, and safety accidents that may occur due to the excessive internal pressure may be prevented.

Referring to FIGS. 2A to 4, the basket portion 150 according to an embodiment of the present disclosure may be in communication with the accommodation chamber portion 130 and may be arranged in the accommodation chamber portion 130. The coffee bean powder CB may be accommodated in the basket portion 150.

Referring to FIGS. 2A to 4, the basket portion 150 according to an embodiment of the present disclosure may include a basket body 151, a basket flow path portion 153, and a basket plate 155.

Referring to FIGS. 2A to 4, the basket body 151 according to an embodiment of the present disclosure may have a hollow inside and the coffee bean powder CB may be contained in the basket body 151. The basket body 151 is inserted into the accommodation chamber portion 130, and a lower side (based on FIG. 2A) thereof may be connected to the basket flow path portion 153.

Referring to FIGS. 2A and 4, the basket body 151 according to an embodiment of the present disclosure may receive the supply of the first fluid F1 from the basket flow path portion 153, and when the first fluid F1 flowing in from the basket flow path portion 153 passes through the coffee bean powder CB contained in the basket body 151 while generating coffee CE, and the coffee CE may flow to the container portion 170 after passing through the filter portion 160 that is described later.

In an alternative embodiment, an outer circumference of the basket body 151 according to an embodiment of the present disclosure may be in close contact with the inner circumference of the accommodation chamber portion 130, and thus, the inside of the accommodation chamber portion 130 may be maintained in the sealed state accordingly.

The basket plate 155 may be arranged in the basket body 151 according to an embodiment of the present disclosure. The basket plate 155 is formed in a plate shape and may have a plurality of holes formed therein. The first fluid F1 accommodated in the accommodation chamber portion 130 flows in the direction from the lower side to the upper side (based on FIG. 4) through the basket flow path portion 153, passes through the holes formed in the basket plate 155, and passes through the coffee bean powder CB to generate the coffee CE.

Referring to FIGS. 2A and 4, the basket plate 155 according to an embodiment of the present disclosure may support the coffee bean powder CB contained in the basket body 151 and may prevent the coffee bean powder CB from moving into the basket flow path portion 153 and the accommodation chamber portion 130.

Referring to FIG. 2A, a protrusion 152 may be formed outwardly along the upper end portion of the outer circumference of the basket body 151 according to an embodiment of the present disclosure. The protrusion 152 may be placed on the upper end portion of the accommodation chamber portion 130.

As such, a lower surface of the protrusion 152 and the upper surface of the accommodation chamber portion 130 come into contact with each other, and thus, the basket portion 150, in particular, the basket body 151, may be arranged on a preset position in the accommodation chamber portion 130.

In addition, the basket body 151 having the protrusion 152 formed thereon comes into contact with the accommodation chamber portion 130, and thus, the sealed state of the internal space of the accommodation chamber portion 130 may be maintained.

Referring to FIGS. 2A to 4, the basket flow path portion 153 according to an embodiment of the present disclosure is connected to the basket body 151 and may be in communication with the inside of the basket body 151. The basket flow path portion 153 may be connected to the lower surface (based on FIG. 2A) of the basket body 151.

The basket body 151 according to an embodiment of the present disclosure may extend along the center axis in the lengthwise direction (vertical direction based on FIG. 2A), and one side (lower side based on FIG. 2A) of the basket body 151 facing the bottom plate portion 120 may be connected to the basket flow path portion 153.

Referring to FIGS. 2A to 4, the basket flow path portion 153 according to an embodiment of the present disclosure is in communication with the basket body 151 and may extend along the center axis in the lengthwise direction (vertical direction based on FIG. 2A), and may have a hollow inside.

One side (upper side based on FIG. 2A) of the basket flow path portion 153 is in communication with the basket body 151, and the other side (lower side based on FIG. 2A) facing the above side may be located in the accommodation chamber portion 130 while being opened.

As such, the first fluid F1 accommodated in the accommodation chamber portion 130 flows into the basket flow path portion 153 due to the steam pressure of the second fluid F2 discharged through the gas supply tube portion 121, and may flow in the direction from the lower side to the upper side (based on FIG. 4).

Referring to FIGS. 2A to 4, the basket plate 155 according to an embodiment of the present disclosure is arranged in the basket body 151 and the outer circumference thereof may be coupled to the inner surface of the basket body 151.

However, the present disclosure is not limited thereto, and the basket plate 155 and the basket body 151 may be integrally formed with each other. At least one hole may be formed in the basket plate 155, and the first fluid F1 may pass through the hole of the basket plate 155.

Referring to FIG. 4, the coffee bean powder CB may be on one surface of the basket plate 155 according to an embodiment of the present disclosure, and the basket plate 155 may prevent the coffee bean powder CB from escaping toward the bottom plate portion 120 and may support the coffee bean powder CB from one side (lower side based on FIG. 4).

Referring to FIGS. 2A to 4, the filter portion 160 according to an embodiment of the present disclosure covers the basket portion 150 and may have a plurality of holes. Because the holes are formed in the filter portion 160, the coffee CE generated when the first fluid F1 passes through the coffee bean powder CB may pass through the filter portion 160, and the coffee bean powder CB may continue to stay in the basket body 151.

Referring to FIGS. 2A and 4, an outer diameter of the filter portion 160 according to an embodiment of the present disclosure may be relatively greater than an inner diameter of the basket portion 150, in particular, the basket body 151, and an inner diameter of the accommodation chamber portion 130.

As such, the filter portion 160 may be stably seated while being placed on the upper end portion of the basket body 151 or the accommodation chamber portion 130.

Referring to FIGS. 1 to 4, the container portion 170 according to an embodiment of the present disclosure may be connected to the boil chamber portion 110, and may receive content that is generated when the first fluid F1 supplied from the accommodation chamber portion 130 passes through the basket portion 150 and the filter portion 160.

Referring to FIGS. 1 to 4, the container portion 170 according to an embodiment of the present disclosure may include a container body 171, an extraction tube portion 173, a pressure measurement portion 175, and an opening/closing valve 177.

The container body 171 according to an embodiment of the present disclosure may be connected to the boil chamber portion 110 while covering one side (upper side based on FIG. 2A) of the boil chamber portion 110.

In the present disclosure, the container body 171 is connected to the boil chamber portion 110 in a screw-coupling manner, but one or more embodiments are not limited thereto, and various modifications may be possible within the technical scope in which the connection is made while covering one side of the boil chamber portion 110.

Referring to FIG. 2B, in an alternative embodiment, the boil chamber portion 110 and the container body 171 may be connected in an insertion manner, not in the screw-coupling manner, and a packing member PM may be inserted between the lower end portion of the container body 171 and the upper end portion of the boil chamber portion 110.

Because the packing member PM is disposed between the lower end portion of the container body 171 and the upper end portion of the boil chamber portion 110, the container body 171 and the inside of the boil chamber portion 110 may be connected in a sealed state even when the boil chamber portion 110 and the container body 171 are not connected to each other in the screw-coupling manner.

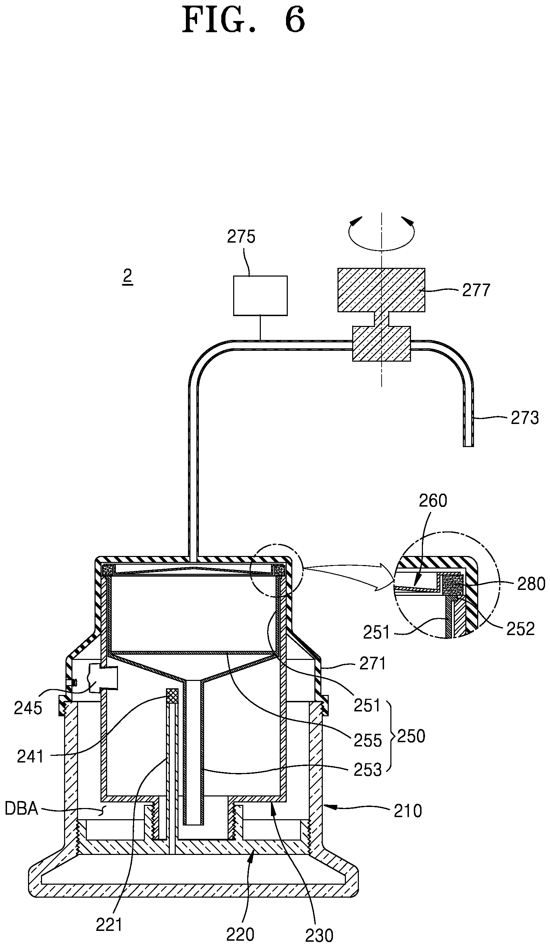

The packing member PM disposed between the boil chamber portion 110 and the container body 171 may be applied equally to a coffee extraction apparatus 2 shown in FIG. 6 that will be described later according to another embodiment, and in detail, a lower end portion of a container body 271 and an upper end portion of a boil chamber portion 210 may be connected to each other in an insertion manner, and a packing member may be inserted between the lower end portion of the container body 271 and the upper end portion of the boil chamber portion 210.

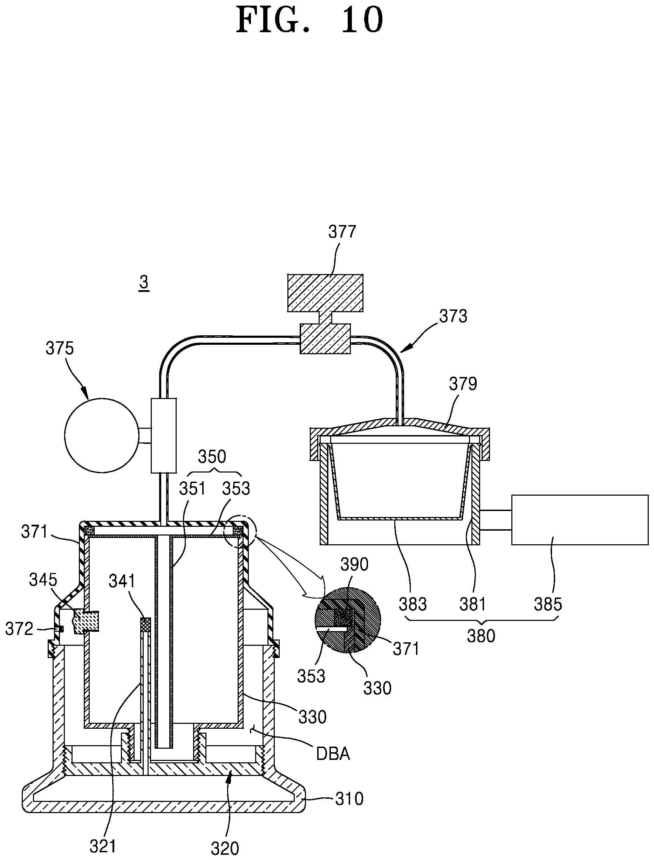

Also, the above description may be applied equally to a coffee extraction apparatus 3 shown in FIG. 10 that will be described later according to another embodiment of the present disclosure, and in detail, a lower end portion of a cover body 371 and an upper end portion of a boil chamber portion 310 are connected to each other in an insertion manner, and a packing member (not shown) may be inserted between the lower end portion of the cover body 371 and the upper end portion of the boil chamber portion 210.

Referring to FIGS. 1 to 3, at least one discharge hole portion 172 may be formed in an outer circumference of the container body 171 according to an embodiment of the present disclosure.

As such, when the internal pressure increases because the second fluid F2 accommodated in the internal space surrounded by the boil chamber portion 110 and the container body 171, in particular, the accommodation space DBA, is heated by the heat transferred from the heat source H, the gas G may be discharged to the outside via the discharge hole portion 172 so as to reduce the internal pressure.

Referring to FIGS. 1 to 4, the extraction tube portion 173 according to an embodiment of the present disclosure may be connected to the container body 171 and may allow the content supplied from the accommodation chamber portion 130 to flow and to be discharged to the outside.

The extraction tube portion 173 may partition the inner space of the container body 171 into a plurality of regions, may provide a passage through which the coffee CE that is the content generated when the first fluid F1 passes through the coffee bean powder CB at the lower side thereof, and the content extracted through the extraction tube portion 173 may be accommodated in a storage space SA that is the internal space of the container body 171 that is formed on the extraction tube portion 173.

A guide portion (not indicated by reference numeral) may be formed on the upper end portion of the container body 171 to be inclined, and when a user grips and tilts the coffee extraction apparatus 1, the coffee CE that is the content accommodated in the storage space SA formed in the container body 171 may be poured in a container such as a cup, etc. along the guide portion.

Referring to FIGS. 1 to 4, the pressure measurement portion 175 according to an embodiment of the present disclosure may be installed on the extraction tube portion 173 and measures the internal pressure of the extraction tube portion 173.

Referring to FIGS. 1 to 4, the opening/closing valve 177 according to an embodiment of the present disclosure is installed on the extraction tube portion 173 and may open/close the extraction tube portion 173 to control whether to extract the coffee CE, e.g., the content, to the outside, in particular, to the inner space of the container body 171.

The user may measure the internal pressure of the extraction tube portion 173 via the pressure measurement portion 175 so as to identify whether the internal pressure reaches an optimal pressure for extracting coffee CE, e.g., 4 to 9 atmospheric pressure.

When the pressure reaches the desired pressure of the user, the user may open the extraction tube portion 173 by manipulating the opening/closing valve 177 and extracts the coffee CE that is the content to the outside.

However, the present disclosure is not limited thereto, that is, the pressure measurement portion 175 and the opening/closing valve 177 may be driven fully automatically, and various modifications are possible, e.g., an electrical signal is transferred from a controller (not shown) for controlling the operation of the opening/closing valve 177 at a preset pressure.

Although not shown in the drawings, the coffee extraction apparatus 1 according to an embodiment of the present disclosure may further include a container cover (not shown) that may cover the upper side (based on FIG. 1) of the container body 171.

The container cover may block external impurities from flowing into the container body 171, and the temperature of the content, e.g., the coffee CE, may be stably maintained.

Although not shown in the drawings, the container portion 170 may further include a handle (not shown) coupled to the outer circumference of the container body 171. The handle is coupled to the outer circumference of the container body 171 and may be formed of a material that does not transfer the heat.

As such, even when the temperature of the container body 171 rises due to the coffee CE contained therein, the user may pour the coffee into the external container such as a cup, etc. by holding the handle.

Referring to FIGS. 2A to 4, the packing portion 180 according to an embodiment of the present disclosure is disposed between the basket portion 150 and the filter portion 160 and may come into contact respectively with the basket portion 150 and the filter portion 160. The packing portion 180 may be formed in a ring shape.

In detail, the packing portion 180 may be disposed on the upper side of the basket portion 150 and may be located in the container portion 170 connected to the boil chamber portion 110, in detail, in the container body 171.

Because the packing portion 180 according to an embodiment of the present disclosure is in contact respectively with the basket portion 150 and the filter portion 160, the hermetic property may be improved and the internal pressure of the accommodation chamber portion 130 may be maintained.

The packing portion 180 according to an embodiment of the present disclosure may be variously formed of metal, non-metal, rubber materials, etc. within the technical scope in which the packing portion 180 is disposed between the basket portion 150 and the filter portion 160 and is in contact respectively with the basket portion 150 and the filter portion 160.

Operation principles and effects of the coffee extraction apparatus 1 according to an embodiment of the present disclosure are described below.

Referring to FIGS. 1 to 4, the coffee extraction apparatus 1 according to an embodiment of the present disclosure may include the boil chamber portion 110, the bottom plate portion 120, the accommodation chamber portion 130, the first valve portion 141, the second valve portion 145, the basket portion 150, the filter portion 160, the container portion 170, and the packing portion 180.

The user may fill the boil chamber portion 110 with the second fluid F2. In detail, the second fluid F2 may be water and may be heated directly by the heat transferred from the heat source H in the boil chamber portion 110.

The second fluid F2 is filled in the boil chamber portion 110, and the bottom plate portion 120 may be arranged in the boil chamber portion 110. The bottom plate portion 120 may be fastened with the boil chamber portion 110. In addition, because the bottom plate portion 120 is located in the boil chamber portion 110, the internal space of the boil chamber portion 110 may be partitioned into a plurality of regions.

The accommodation chamber portion 130 may be coupled to the bottom plate portion 120, and the bottom plate portion 120 may be coupled to the boil chamber portion 110 while the accommodation chamber portion 130 is coupled to the bottom plate portion 120.

Because the bottom plate portion 120 is coupled to the boil chamber portion 110, the second fluid F2 filled in the lower side (based on FIG. 4) based on the bottom plate portion 120 may be located in the internal space of the boil chamber portion 110, which corresponds to the upper side (based on FIG. 4) of the bottom plate portion 120.

The bottom plate portion 120 is arranged in and coupled to the boil chamber portion 110, and the accommodation space DBA capable of accommodating the second fluid F2 may be formed in a space surrounded by the upper surface (based on FIG. 4) of the bottom plate portion 120, the outer circumference of the accommodation chamber portion 130 coupled to the bottom plate portion 120, and the inner circumference of the boil chamber portion 110.

The accommodation space DBA is heated by the heat transferred from the heat source H, and because the second fluid F2 filled in the accommodation space DBA is heated by the heat transferred from the heat source H, the first fluid F1 accommodated in the accommodation chamber portion 130 may be double-boiled. In detail, the first fluid F1 may be water.

Because the first fluid F1 is double-boiled, the temperature of the first fluid F1 does not exceed 100 °C and may be maintained at the temperature of 90 °C to 95 °C, that is, the optimal temperature for extracting coffee CE.

The accommodation chamber portion 130 has a hollow inside, and one side (lower side based on FIG. 4) of the accommodation chamber portion 130 is coupled to the bottom plate portion 120 and the other side (upper side based on FIG. 4) corresponding to the above side may be opened.

The basket portion 150 may be inserted in the accommodation chamber portion 130 through the other side. The basket portion 150 includes the basket body 151, the basket flow path portion 153, and the basket plate 155, and the coffee bean powder CB may be accommodated in the basket body 151.

In detail, the coffee bean powder CB may be disposed on the basket plate 155 installed in the basket body 151, and the basket portion 150 is connected to the basket body 151 and receives the supply of the first fluid F1 from the accommodation chamber portion 130, and may provide the flowing passage of the first fluid F1.

Referring to FIGS. 3 and 4, the packing portion 180 and the filter portion 160 may be sequentially arranged on the upper side of the basket portion 150. In addition, while the packing portion 180 and the filter portion 160 are arranged, the container portion 170 may be connected to the boil chamber portion 110 while covering the boil chamber portion 110 and the bottom plate portion 120, the basket portion 150, the accommodation chamber portion 130, the packing portion 180, and the filter portion 160 arranged in the boil chamber portion 110.

Referring to FIG. 4, as the boil chamber portion 110 is heated by the heat transferred from the heat source H, the second fluid F2 accommodated in the boil chamber portion 110 is directly heated.

The second fluid F2 accommodated in the internal space of the boil chamber portion 110 located in the lower side based on the bottom plate portion 120 is heated by the heat transferred from the heat source H and increases the pressure, and the gas G flows through the gas supply tube portion 121 formed in the bottom plate portion 120 and may be supplied to the accommodation chamber portion 130.

The first valve portion 141 may be installed at one end portion (upper end portion based on FIG. 4) of the gas supply tube portion 121. The first valve portion 141 closes the flow path until the pressure reaches a preset pressure, and then opens the flow path when the pressure reaches the preset pressure so as to supply the second fluid F2 in the gas G phase into the accommodation chamber portion 130 and increase the internal pressure.

At the same time, the second fluid F2 accommodated in the internal space of the boil chamber portion 110, which is located on the upper side (based on FIG. 4) based on the bottom plate portion 120, is heated and transfers the heat to the first fluid F1 accommodated in the accommodation chamber portion 130, and in particular, double-boils the first fluid F1 so that the temperature of the first fluid F1 does not exceed the temperature of 100°C.

At least one discharge hole portion 172 is formed in the container body 171 so as to discharge the gas G generated therein to the outside, so that the excessive increase in the internal pressure due to the heating of the second fluid F2 accommodated in the internal space of the boil chamber portion 110 located on the upper side of the bottom plate portion 120 may be prevented.

Referring to FIG. 4, the second valve portion 145 may be installed in the accommodation chamber portion 130, and thus, the excessive increase in the internal pressure of the accommodation chamber portion 130 due to the gas G supplied from the gas supply tube portion 121 may be prevented.

The second fluid F2 is heated by the heat transferred from the heat source H, the second fluid F2 accommodated in the accommodation space DBA double-boils the first fluid F1 accommodated in the accommodation chamber portion 130, and the internal pressure of the accommodation chamber portion 130 is increased due to the steam pressure of the second fluid F2 heated in the boil chamber portion 110 so that the first fluid F1 may flow into the basket portion 150.

The first fluid F1 flows in the basket flow path portion 153 and generates the coffee CE while passing through the hole formed in the basket plate 155 and the coffee bean powder CB located on the basket plate 155.

The coffee CE flows in the container portion 170, in particular, the extraction tube portion 173, after passing through the holes formed in the filter portion 160 and may flow from the lower side to the upper side (based on FIG. 4).

Referring to FIG. 4, the pressure measurement portion 175 and the opening/closing valve 177 may be installed on the extraction tube portion 173, and thus, the pressure may be adjusted when extracting the coffee CE flowing in the extraction tube portion 173.

The coffee CE extracted to the outside of the extraction tube portion 173 may be accommodated in the storage space SA that is the internal region of the container body 171. The user may drink the coffee CE after pouring the coffee into a separate container such as a cup, a tumbler, etc.

In the coffee extraction apparatus 1 according to an embodiment of the present disclosure, the second fluid F2 heated directly by the heat transferred from the heat source H double-boils the first fluid F1 accommodated in the accommodation chamber portion 130 that is arranged inside thereof to be spaced apart from the boil chamber portion 110, and thus, the temperature of the first fluid F1 does not exceed 100 °C, but is heated to the temperature of 90 °C to 95 °C.

In addition, because the bottom plate portion 120 is arranged inside the boil chamber portion 110 and partitions the boil chamber portion 110 into a plurality of regions, the accommodation space DBA capable of accommodating the second fluid F2 may be formed between the outer circumference of the accommodation chamber portion 130 and the inner circumference of the boil chamber portion 110, and the first fluid F1 accommodated in the accommodation chamber portion 130 is double-boiled to an optimal temperature for coffee extraction.

Also, the steam pressure from the second fluid F2 that is directly heated by the heat transferred from the heat source H may be supplied into the accommodation chamber portion 130 due to the gas supply tube portion 121 formed in the bottom plate portion 120, and thus, the coffee CE may be extracted by the optimal pressure for coffee extraction.

Hereinafter, a structure, operating principles, and effects of a coffee extraction apparatus 2 according to another embodiment of the present disclosure will be described below.

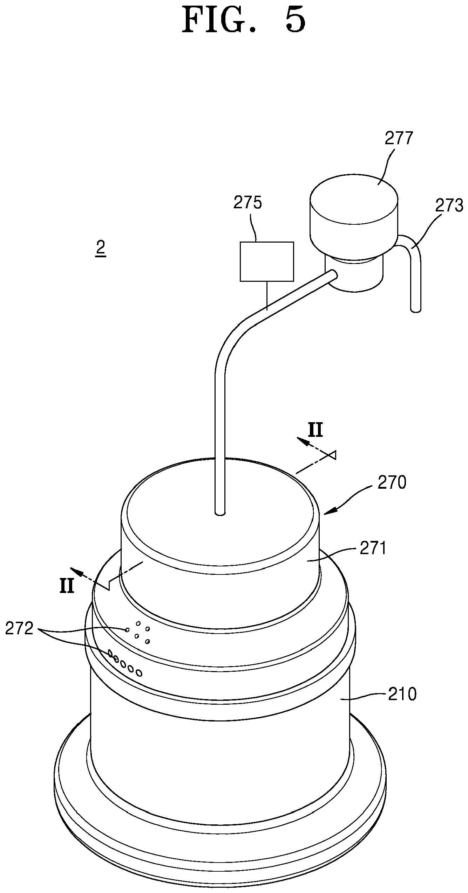

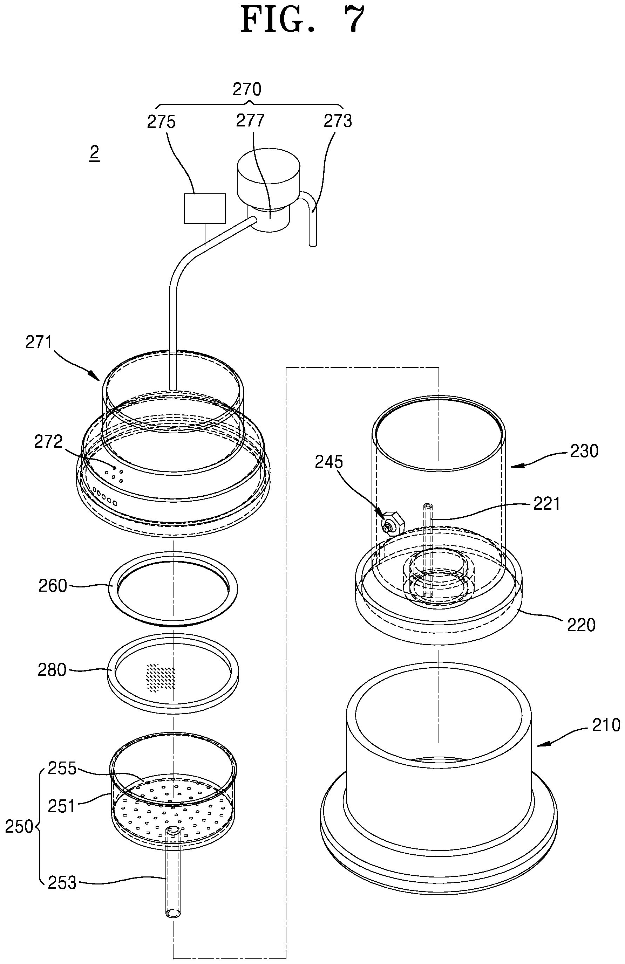

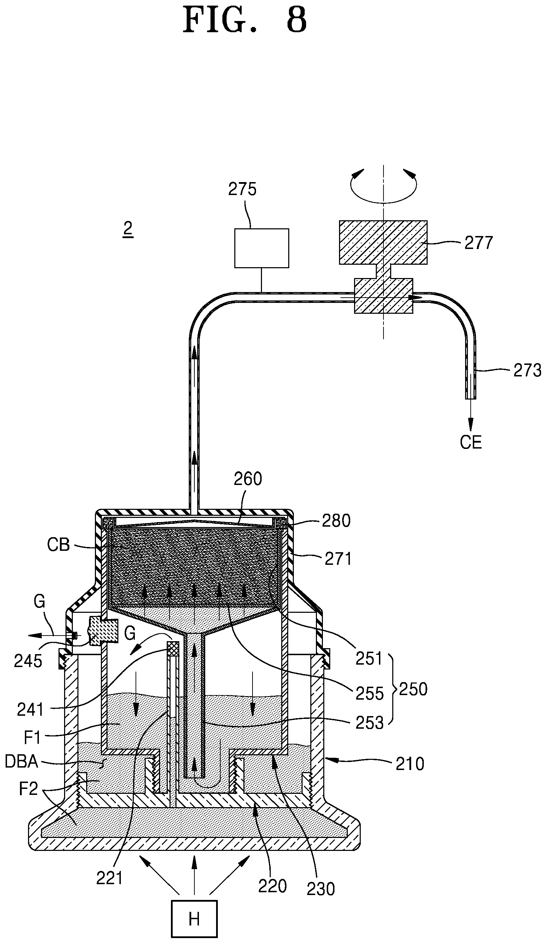

FIG. 5 is a perspective view of a coffee extraction apparatus according to another embodiment of the present disclosure. FIG. 6 is a cross-sectional view taken along line II-II of FIG. 5. FIG. 7 is an exploded perspective view of a coffee extraction apparatus according to an embodiment of the present disclosure. FIG. 8 is a diagram showing a state of using a coffee extraction apparatus according to an embodiment of the present disclosure.

Referring to FIGS. 5 to 8, the coffee extraction apparatus 2 according to another embodiment of the present disclosure may include a boil chamber portion 210, a bottom plate portion 220, an accommodation chamber portion 230, a first valve portion 241, a second valve portion 245, a basket portion 250, a filter portion 260, a container portion 270, and a packing portion 280.

The coffee extraction apparatus 2 according to another embodiment of the present disclosure may have the boil chamber portion 210, the bottom plate portion 220, the accommodation chamber portion 230, the basket portion 250, the first valve portion 241, the second valve portion 245, the filter portion 260, and the packing portion 280 having the same structures, operation principles, and effects as those of the coffee extraction apparatus 1 according to an embodiment of the present disclosure, and thus, redundant descriptions thereof are omitted, and the structure of the container portion 270 is described in detail below.

Although not shown in the drawings, a handle (not shown) may be connected to an outer circumference of the boil chamber portion 210 according to another embodiment of the present disclosure. The handle may be formed of a material that does not transfer heat.

As such, even when the temperature of the boil chamber portion 210 heated by the external heat source H rises, the user may hold the handle and move the coffee extraction apparatus 2.

Referring to FIGS. 5 to 9, the container portion 270 according to another embodiment of the present disclosure may be connected to the boil chamber portion 210, and may receive content, e.g., coffee CE, that is generated when the first fluid F1 supplied from the accommodation chamber portion 230 passes through the basket portion 250 and the filter portion 260.

Referring to FIGS. 5 to 9, the container portion 270 according to another embodiment of the present disclosure may include a container body 271, an extraction tube portion 273, a pressure measurement portion 275, and an opening/closing valve 277.

The container body 271 according to another embodiment of the present disclosure may be connected to the boil chamber portion 210 while covering one side (upper side based on FIG. 6) of the boil chamber portion 210.

In the present disclosure, the container body 271 is connected to the boil chamber portion 210 in a screw-coupling manner, but the present disclosure is not limited thereto, and various modifications may be possible within the technical scope in which the connection is made while covering one side of the boil chamber portion 210.

Referring to FIGS. 5 to 8, at least one discharge hole portion 272 may be formed in an outer circumference of the container body 271 according to another embodiment of the present disclosure.

As such, when the internal pressure increases because the second fluid F2 accommodated in the inner space surrounded by the boil chamber portion 210 and the container body 271, in particular, the accommodation space DBA, is heated by the heat transferred from the heat source H, the gas G may be discharged to the outside via the discharge hole portion 272 so as to reduce the internal pressure.

Referring to FIGS. 5 to 8, the extraction tube portion 273 according to an embodiment of the present disclosure may be connected to the container body 271 and may allow the content, e.g., coffee CE, supplied from the accommodation chamber portion 230 to flow and to be discharged to the outside.

Referring to FIGS. 5 to 8, the extraction tube portion 273 may be connected to the outer circumference of the container body 271, and may allow the coffee CE to be extracted from the inside to the outside of the container body 271.

Referring to FIGS. 5 to 8, the extraction tube portion 273 may be bent at least once and may extract the coffee CE to a separate container, e.g., a cup, etc. from the position spaced apart from the boil chamber portion 210 and the container body 271.

Referring to FIGS. 5 to 8, the pressure measurement portion 275 may be installed on the extraction tube portion 273 and may measure the internal pressure of the extraction tube portion 273. Referring to FIGS. 5 to 8, the opening/closing valve 277 is installed on the extraction tube portion 273 and may open/close the extraction tube portion 273 so as to control whether to extract the content, e.g., the coffee CE, to the outside, in particular, to the internal space of the container body 271.

The user may measure the internal pressure of the extraction tube portion 273 via the pressure measurement portion 275 so as to identify whether the internal pressure reaches an optimal pressure for extracting coffee CE, e.g., 4 to 9 atmospheric pressure.

When the pressure reaches the desired pressure of the user, the user may open the extraction tube portion 273 by manipulating the opening/closing valve 277 and extracts the coffee CE that is the content to the outside.

However, the present disclosure is not limited thereto, that is, the pressure measurement portion 275 and the opening/closing valve 277 may be driven fully automatically, and various modifications are possible, e.g., an electrical signal is transferred from a controller (not shown) for controlling the operation of the opening/closing valve 277 at a preset pressure.

In the coffee extraction apparatus 2 according to another embodiment of the present disclosure, the structure, operation principles, and effects of the boil chamber portion 210, the bottom plate portion 220, the accommodation chamber portion 230, the first valve portion 241, the second valve portion 245, the basket portion 250, and the packing portion 280 are the same as those of the boil chamber portion 110, the bottom plate portion 120, the accommodation chamber portion 130, the first valve portion 141, the second valve portion 245, the basket portion 150, and the packing portion 180 of the coffee extraction apparatus 1 according to an embodiment of the present disclosure, except that the extraction tube portion 273 is connected to the container body 271 and may directly extract the coffee CE generated in the container body 271 to a separate container located outside, and thus, redundant descriptions thereof are omitted.

Hereinafter, a structure, operating principles, and effects of a coffee extraction apparatus 3 according to another embodiment of the present disclosure will be described below.

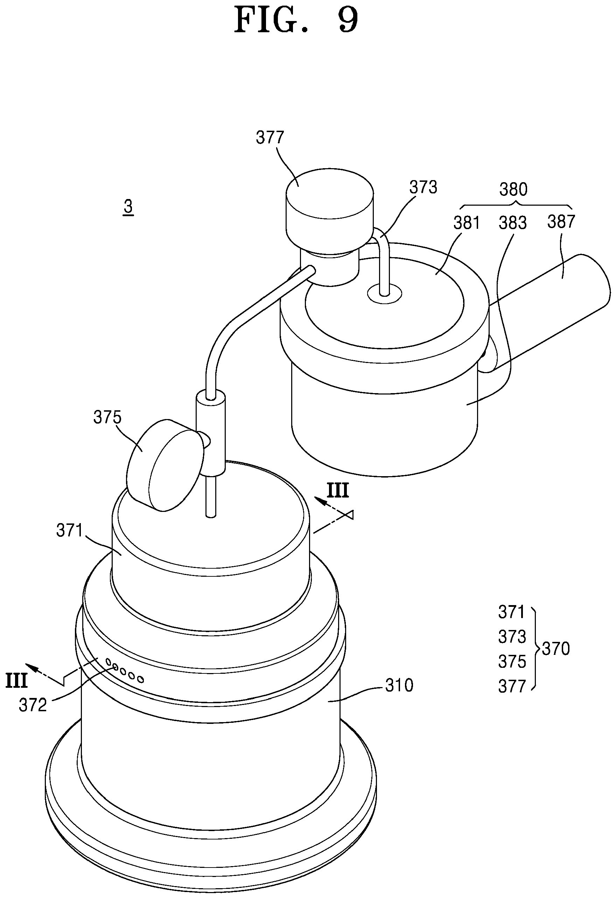

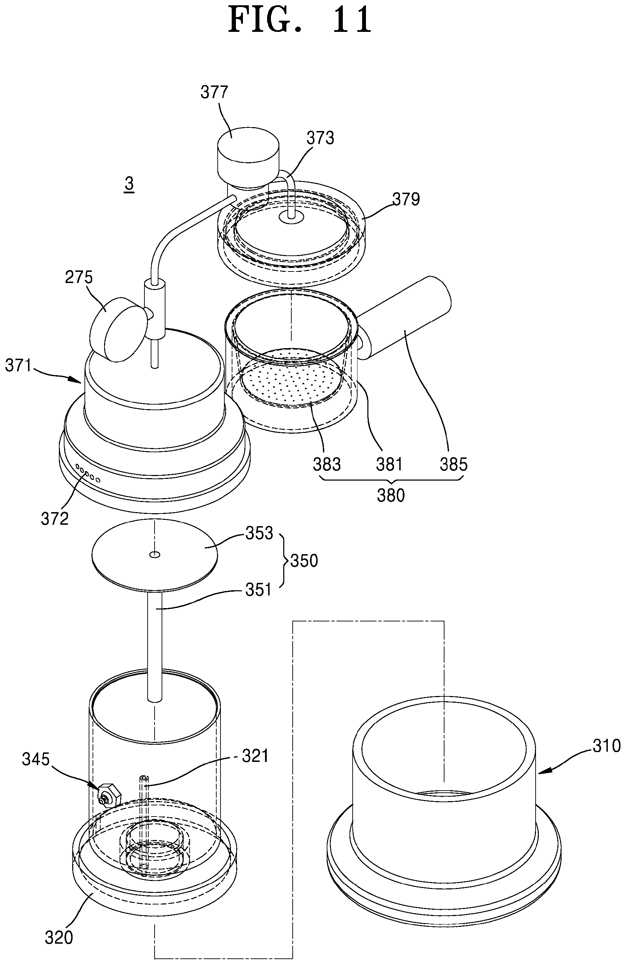

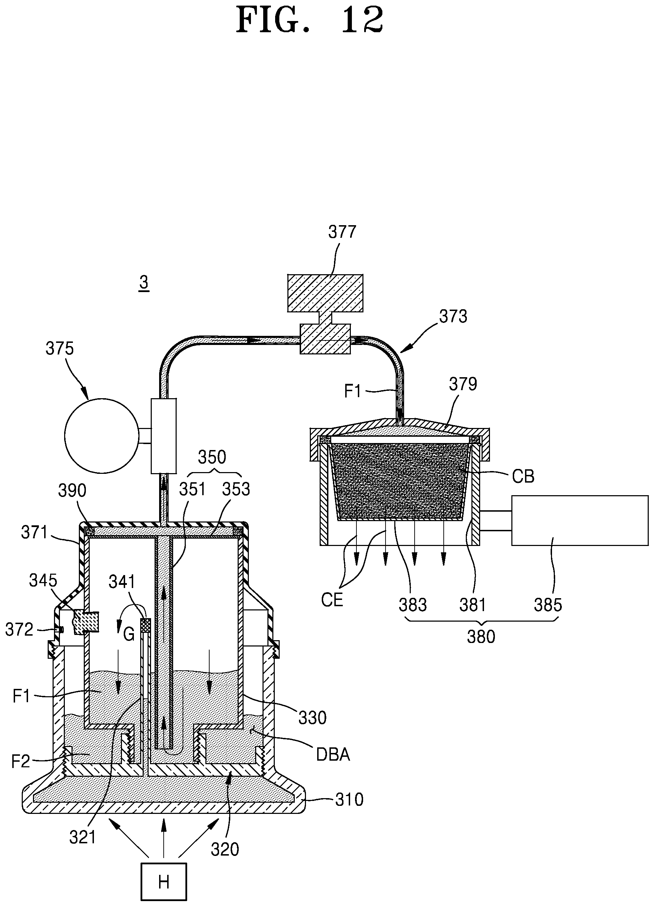

FIG. 9 is a perspective view of a coffee extraction apparatus according to another embodiment of the present disclosure. FIG. 10 is a cross-sectional view taken along line III-III of FIG. 9. FIG. 11 is an exploded perspective view of a coffee extraction apparatus according to an embodiment of the present disclosure. FIG. 12 is a diagram showing a state of using a coffee extraction apparatus according to an embodiment of the present disclosure.

Referring to FIGS. 9 to 12, the coffee extraction apparatus 3 according to another embodiment of the present disclosure may include a boil chamber portion 310, a bottom plate portion 320, an accommodation chamber portion 330, a first valve portion 341, a second valve portion 345, a basket portion 383, a flow path portion 350, a cover portion 370, an extraction portion 380, and a packing portion 390.

The coffee extraction apparatus 3 according to another embodiment of the present disclosure includes the boil chamber portion 310, the bottom plate portion 320, the accommodation chamber portion 330, the first valve portion 341, the second valve portion 345, and the packing portion 390 having the same structures, operation principles, and effects as those of the coffee extraction apparatus 1 according to an embodiment of the present disclosure, except for the structures of the flow path portion 350, the cover portion 370, and the extraction portion 380, and hereinafter, the structures of the flow path portion 350, the cover portion 370, and the extraction portion 380 are described in detail below.

Although not shown in the drawings, a handle (not shown), e.g., a handle portion 385 that is described later, may be connected to an outer circumference of the boil chamber portion 310 according to another embodiment of the present disclosure. The handle may be formed of a material that does not transfer heat.

As such, even when the temperature of the boil chamber portion 310 heated by the external heat source H rises, the user may hold the handle and move the coffee extraction apparatus 3.

Referring to FIGS. 10 to 12, the flow path portion 350 is in communication with the accommodation chamber portion 330, and may provide a flow path of the first fluid F1 to the outside, the first fluid F1 being accommodated in the accommodation chamber portion 330. The flow path portion 350 may include a flow path body 351 and a support plate 353.

Referring to FIG. 10, one side (upper side based on FIG. 10) of the flow path body 351 is connected to the support plate 353 and the other side (lower side based on FIG. 10) is opened to be supplied with the first fluid F1 from the accommodation chamber portion 330.

Referring to FIG. 10, the flow path body 351 extends along a center axis formed in the lengthwise direction and has a hollow inside, and may transfer the first fluid F1 to the cover portion 370, in particular, to the supply flow path portion 373.

Referring to FIG. 10, the support plate 353 covers the accommodation chamber portion 330 and may seal the internal space of the accommodation chamber portion 330. The support plate 353 according to the present disclosure is formed in a disc shape, but is not limited thereto, and may be variously modified within the technical scope in which the internal space of the accommodation chamber portion 330 is sealed.

Referring to FIGS. 10 and 12, the packing portion 390 may be disposed between an inner circumference of the cover body 371 and the support plate 353, and thus, the support plate 353 may be in close contact with the accommodation chamber portion 330 and the internal space of the accommodation chamber portion 330 may be sealed.

Referring to FIGS. 9 to 12, the cover portion 370 may be connected while covering the boil chamber portion 310 and may be supplied with the first fluid F1 from the flow path portion 350 and discharge the first fluid to the outside.

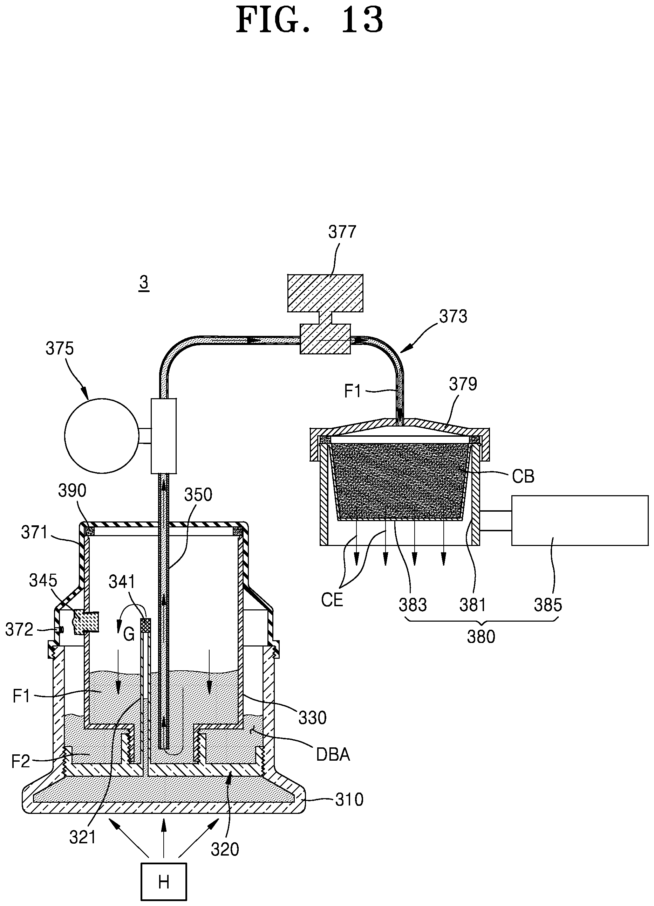

In an alternative embodiment, referring to FIG. 13, the flow path portion 350 according to another embodiment of the present disclosure extends along the center axis in the lengthwise direction, and may be connected to the cover portion 370, in particular, the supply flow path portion 373.

Here, the flow path portion 350 and the supply flow path portion 373 may be integrally formed with each other. As such, the first fluid F1 that is double-boiled in the accommodation chamber portion 330 passes through the inside of the flow path portion 350 and may flow to the supply flow path 373 that is integrally formed and connected with the flow path portion 350.

Referring to FIGS. 9 and 10, the cover portion 370 may include a cover body 371, the supply flow path 373, a pressure measurement portion 375, an opening/closing valve 377, and a connection portion 379. The cover body 371 may be connected to the boil chamber portion 310 while covering one side (upper side based on FIG. 10) of the boil chamber portion 310.

In the present disclosure, the cover body 371 is connected to the boil chamber portion 310 in a screw-coupling manner, but one or more embodiments are not limited thereto, and various modifications may be possible within the technical scope in which the connection is made while covering one side of the boil chamber portion 310.

Referring to FIG. 9, at least one discharge hole portion may be formed in the outer circumference of the cover body 371.

As such, when the internal pressure increases because the second fluid F2 accommodated in the inner space surrounded by the boil chamber portion 310 and the cover body 371, in particular, the accommodation space DBA, is heated by the heat transferred from the heat source H, the gas G may be discharged to the outside via the discharge hole portion so as to reduce the internal pressure.

Referring to FIGS. 9 to 12, the supply flow path portion 373 is connected to the cover body 371 and may transfer the first fluid F1 supplied from the accommodation chamber portion 330 through the flow path portion 350 to the extraction portion 380. The first fluid F1 flowing through the supply flow path portion 373 may satisfy optimal temperature and pressure for extracting coffee CE.

In detail, the second fluid F2 accommodated in the accommodation space DBA formed between the inner circumference of the boil chamber portion 310 and the outer circumference of the accommodation chamber portion 330 receives the heat from the heat source H and double-boils the first fluid F1 accommodated in the accommodation chamber portion 330, so that the first fluid F1 may be transferred to the extraction portion 380 at the temperature less than 100 °C, in particular, the temperature of 90 °C to 95 °C.

In addition, the second fluid F2 accommodated in the space formed between the bottom plate portion 320 and the lower surface of the boil chamber portion 310 is heated by the heat transferred from the heat source H and transferred to the accommodation chamber portion 330 through the gas supply tube portion 321 to increase the internal pressure in the accommodation chamber portion 330 and allow the first fluid F1 to flow through the flow path portion 350, and at this time, the first fluid F1 may be transferred to the extraction portion 380 with the pressure appropriate for extracting the coffee CE, e.g., 4 to 9 atmospheric pressure.

Referring to FIGS. 9 to 12, the pressure measurement unit 375 may be installed on the supply flow path portion 373 and may measure the internal pressure of the supply flow path portion 373. Referring to FIGS. 9 to 12, the opening/closing valve 377 is installed on the supply flow path portion 373 and opens/closes the supply flow path portion 373, so as to control whether to extract the first fluid F1 to the extraction portion 380.

The user may measure the internal pressure of the supply flow path 373 via the pressure measurement portion 375, and may identify whether the pressure of the first fluid F1 reaches to the optimal pressure for extracting coffee CE, e.g., 4 to 9 atmospheric pressure.

When the pressure reaches the desired pressure of the user, the user may open the supply flow path portion 373 by manipulating the opening/closing valve 377 and extracts the coffee CE that is the content to the outside.

However, the present disclosure is not limited thereto, that is, the pressure measurement portion 375 and the opening/closing valve 377 may be driven fully automatically, and various modifications are possible, e.g., an electrical signal is transferred from a controller (not shown) for controlling the operation of the opening/closing valve 377 at a preset pressure.

Referring to FIGS. 9 to 12, the connection portion 379 is connected to the supply flow path portion 373 and may be connected to the extraction portion 380 that is described later. The connection portion 379 is fastened with the extraction portion 380 and fixes the position of the extraction portion 380.

The connection portion 379 and the extraction portion 380 may share the center and may be fastened with each other via the relative rotation between the connection portion 379 and the extraction portion 380.

Because the extraction portion 380 is fastened with the connection portion 379, the first fluid F1 flowing through the supply flow path portion 373 may enter the extraction portion 380 and passes through the coffee bean powder CB accommodated in the extraction portion 380 to generate and extract the coffee CE.

Referring to FIGS. 9 to 12, the extraction unit 380 is provided with a filter portion and may be connected to the cover portion 370, in particular, the connection portion 379. The extraction portion 380 may include an extraction housing 381, a basket portion 383, and the handle portion 385.

Referring to FIGS. 9 to 12, the extraction housing 381 may have the basket portion 383 arranged therein and may have the handle portion 385 connected to the outer circumference thereof. The user may connect the extraction housing 381 to the cover portion 370, in particular, the connection portion 379, while holding the handle portion 385.

Referring to FIGS. 10 and 12, the extraction housing 381 may have upper and lower sides that are opened along the lengthwise direction (vertical direction based on FIG. 10) thereof.

As such, the first fluid F1 transferred from the supply flow path portion 373 is received through the upper side thereof and the coffee CE generated when the first fluid F1 passes through the coffee bean powder CB accommodated in the basket portion 383, passes through the lower side to an external container such as a cup, etc.

Referring to FIGS. 10 to 12, the basket portion 383 is arranged inside the extraction housing 381 and may accommodate the coffee bean powder CB therein. A hole may be formed in a lower surface (based on FIG. 10) of the extraction housing 381, and the coffee CE generated when the first fluid F1 passes through the coffee bean powder CB may be extracted to the outside via the hole.

Although not shown in the drawing, the filter portion may be disposed between the basket portion 383 and the cover portion 370 covering the basket portion 383, in particular, a lower surface (based on FIG. 10) of the connection portion 379.

The coffee extraction apparatus 3 according to another embodiment of the present disclosure may include the boil chamber portion 310, the bottom plate portion 320, the accommodation chamber portion 330, the first valve portion 341, the second valve portion 234, the basket portion 350, and the packing portion 390 having the same structures, operation principles, and effects as those of the boil chamber portion 110, the boil chamber portion 110, the accommodation chamber portion 130, the first valve portion 141, the second valve portion 145, the basket portion 150, and the packing portion 180 in the coffee extraction apparatus 1 according to an embodiment of the present disclosure, except that the first fluid F1 having the temperature and pressure appropriate for the extraction of coffee CE is transferred through the supply flow path portion 373 to the extraction portion 380 connected to the cover portion 370 and the coffee CE generated when the first fluid F1 passes through the coffee bean powder CB accommodated in the extraction portion 380 is extracted to the outside of the extraction portion 380, and thus, redundant descriptions are omitted.

The particular implementations shown and described herein are illustrative examples of the disclosure and are not intended to otherwise limit the scope of the disclosure in any way. For the sake of brevity, electronics, control systems, software, and other functional aspects of the systems according to the related art may not be described in detail. Furthermore, the connecting lines or connectors shown in the drawings are intended to represent example functional relationships and/or physical or logical couplings between the various elements. It should be noted that many alternative or additional functional relationships, physical connections, or logical connections may be present in a practical device. Moreover, no item or component is essential to the practice of the disclosure unless the element is specifically described as "essential" or "critical".

Therefore, the spirit of the present disclosure shall not be limited to the above-described embodiments, and the entire scope of the appended claims and their equivalents will fall within the scope and spirit of the disclosure.

### Industrial Applicability

According to the present disclosure, a coffee extraction apparatus is provided. Also, embodiments of the present disclosure may be applied to a coffee extraction apparatus which extracts coffee at an appropriate temperature by double-boiling water for extracting coffee, etc. that is industrially used.

## Claims

1. A coffee extraction apparatus comprising:
a boil chamber portion having a hollow inside and one side that is open;
a bottom plate portion arranged inside the boil chamber portion and partitioning the boil chamber portion into a plurality of regions;
an accommodation chamber portion coupled to the bottom plate portion, and having a hollow inside and an opening formed in one side thereof so as to accommodate a first fluid;
a basket portion that is in communication with the accommodation chamber portion and arranged in the accommodation chamber portion, and capable of accommodating coffee bean powder; and
a container portion that is connected to the boil chamber portion, and receives a content that is generated when the first fluid supplied from the accommodation chamber portion passes through the basket portion, wherein an accommodation space capable of accommodating a second fluid is formed between an inner circumference of the boil chamber portion and an outer circumference of the accommodation chamber portion.

2. The coffee extraction apparatus of claim 1, wherein
the bottom plate portion includes a gas supply tube portion that allows the boil chamber portion and the accommodation chamber portion to be in communication with each other and extends to a preset length.

3. The coffee extraction apparatus of claim 1, further comprising
a packing portion disposed between the basket portion and the container portion.

4. The coffee extraction apparatus of claim 1, further comprising a container cover covering the container portion.

5. The coffee extraction apparatus of claim 1, wherein
the container portion comprises:
a container body that is able to be connected to the boil chamber portion; and
an extraction tube portion that is connected to the container body and flows the content supplied from the accommodation chamber portion to be discharged to outside.

6. The coffee extraction apparatus of claim 5, wherein
the container portion further comprises a pressure measurement portion installed on the extraction tube portion and measuring an internal pressure of the extraction tube portion.

7. The coffee extraction apparatus of claim 5, wherein
the container portion further comprises an opening/closing valve installed on the extraction tube portion and opening/closing the extraction tube portion.

8. The coffee extraction apparatus of claim 1, wherein
at least one discharge hole portion is formed in an outer circumference of the container portion to be in communication with the accommodation space.

9. A coffee extraction apparatus comprising:
a boil chamber portion having a hollow inside and one side that is open;
a bottom plate portion arranged inside the boil chamber portion and
partitioning the boil chamber portion into a plurality of regions;
an accommodation chamber portion coupled to the bottom plate portion, and having a hollow inside and an opening formed in one side thereof so as to accommodate a first fluid;
a flow path portion that is in communication with the accommodation chamber portion and provides a flow path of the first fluid accommodated in the accommodation chamber portion to outside;
a cover portion that is connectable to the boil chamber portion while covering the boil chamber portion and discharges the first fluid supplied from the flow path portion to the outside; and
an extraction portion that is connectable to the cover portion and accommodates coffee bean powder, and receives the first fluid from the cover portion to pass the first fluid through the coffee bean powder, wherein an accommodation space capable of accommodating a second fluid is formed between an inner circumference of the boil chamber portion and an outer circumference of the accommodation chamber portion.

10. The coffee extraction apparatus of claim 9, wherein
the cover portion comprises:
a cover body that is able to be connected to the boil chamber portion; and
a supply flow path portion that is connected to the cover body and flows the first fluid supplied from the accommodation chamber portion to be supplied to the extraction portion.
